(19) Europäisches Patentamt / European Patent Office / Office européen des brevets

(11) **EP 4 273 573 A1**

(12) **EUROPEAN PATENT APPLICATION**

(43) Date of publication:
**08.11.2023 Bulletin 2023/45**

(21) Application number: **22305652.4**

(22) Date of filing: **02.05.2022**

(51) International Patent Classification (IPC):
**G01S 5/18** (2006.01)   **G01S 5/00** (2006.01)
**B60R 21/0136** (2006.01)   **G01H 11/00** (2006.01)

(52) Cooperative Patent Classification (CPC):
**G01S 5/18; B60R 21/0136; G01H 11/00;
G01S 5/01; G01S 5/22;** G01S 2205/01

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Saint-Gobain Glass France
92400 Courbevoie (FR)**

(72) Inventors:
• **MERCIER, Gerald
  60200 Compiegne (FR)**
• **ROSIER, Julie
  95430 Auvers-sur-Oise (FR)**
• **QI, Shuibao
  60200 Compiegne (FR)**

(74) Representative: **Saint-Gobain Recherche
B.P. 135
39, quai Lucien Lefranc
93303 Aubervilliers Cedex (FR)**

(54) **DETECTION OF AN IMPACT ON AUTOMOTIVE GLASS**

(57)    The present disclosure relates to a computer-implemented method for detection of an impact on automotive glass. The method comprises obtaining, for each respective sensor of at least three sensors, each at a respective predetermined location on or in proximity to the glass, a respective time of flight, at the respective sensor predetermined location, of a vibration wave generated by an impact on the glass. The method further comprises computing an impact location based on the predetermined locations and on the obtained times of flight. This constitutes an improved method for detection of an impact on automotive glass.

FIG. 1

EP 4 273 573 A1

## Description

## Technical field

The present invention relates to the field of automotive glass, and more specifically to a method, computer system and program for detection of an impact on automotive glass, and to an automotive system comprising the computer system and an automotive glass.

## Technical background

Vehicle glass panels experience all kinds of vibrations, object impact, wind loading and so on, under on-track situations. All the vibrations, impacts and other loadings can be hazardous and can cause failure of the glass panels of vehicles after long-term service. Documents FR2749938A1, and EP3665431A1 relate to this matter.

Within this context, there is still a need for an improved method for detection of an impact on automotive glass.

## Summary of the invention

It is therefore provided a computer-implemented method for detection of an impact on automotive glass. The method comprises obtaining, for each respective sensor of at least three sensors, each at a respective predetermined location on or in proximity to the glass, a respective time of flight, at the respective sensor predetermined location, of a vibration wave generated by an impact on the glass. The method further comprises computing an impact location based on the predetermined locations and on the obtained times of flight.

The method may comprise one or more of the following features:

- the computing further comprises computing a velocity of the vibration wave;
- computing the velocity of the vibration wave and the impact location comprises solving the equations:

$$\sqrt{(x - x_0)^2 + (y - y_0)^2} = V_0 t_1$$

$$\sqrt{(x - x_1)^2 + (y - y_1)^2} = V_0 t_2$$

$$\sqrt{(x - x_2)^2 + (y - y_2)^2} = V_0 t_3$$

where $(x_0, y_0)$, $(x_1, y_1)$, $(x_2, y_2)$ are the sensor locations, $t_1$, $t_2$ and $t_3$, are the times of flight, $V_0$ is the velocity of the vibration wave, and $(x, y)$ is the impact location;
- the method further comprises:
  determining, based on the respective times of flight, a tuning of at least three respective vibration wave emitters so as to generate a vibration wave that matches the vibration wave generated by the impact;
- the determining comprises one or more iterations of:

  generating, by each respective emitter, a respective vibration wave;
  measuring, by the sensors, the respective times of flight of the at least three generated vibration waves;
  comparing the times of flight of the three generated vibration waves to the times of flight of the vibration wave generated by the impact; and
  tuning the emitters if there is a discrepancy between the compared times of flight;

- the steps of generating the respective vibration waves comprises generating the respective vibration waves simultaneously;
- the method further comprises determining a profile and/or an amplitude of the vibration wave that matches the vibration wave generated by the impact, thereby determining a profile and/or an amplitude of the vibration wave generated by the impact;
- the method further comprises, before the determining, denoising the vibration wave that matches the vibration wave generated by the impact;
- each sensor is positioned at a distance larger than a minimal distance from the other sensors;
- the sensors and/or the emitters are transducers; and/or
- the sensors and/or the emitters are located on a top lateral region of the automotive glass.

Additionally or alternatively, the method may comprise one or more of the following steps:

- analyzing the vibration wave profile and vibration wave spectrum;
- analyzing a microphone signal (i.e. audible sound feature) if one or more of the sensors is/are a microphone;
- comparing each of the vibration wave profile and vibration wave spectrum and/or the microphone signal with in-lab test data or training data; and/or
- based on the comparison, quantitatively and/or qualitatively determining/defining the impact types and the resulting risks.

It is further provided a computer program comprising instructions for performing the method.
It is further provided a computer readable data storage medium having recorded thereon the computer program.
It is further provided a computer system comprising a processor coupled to a memory, the memory having recorded thereon the computer program.
It is further provided an automotive glass system comprising an automotive glass and the computer system. The automotive glass system may also comprise the sensors and/or the emitters (e.g. the transducers) discussed herein, and/or the computer system may be a microcontroller or any suitable processing unit or module as further discussed herein after. The automotive system may be provided as a kit comprising the computer system and the glass non-assembled, optionally with a notice of instructions to assemble the computer system with the glass. Alternatively, the automotive glass system may be provided as a single device formed by the glass with the computer assembled to the glass.

## Brief description of the drawings

Non-limiting examples will now be described in reference to the accompanying drawings, where:

FIG.s 1 and 2 illustrate the method; and

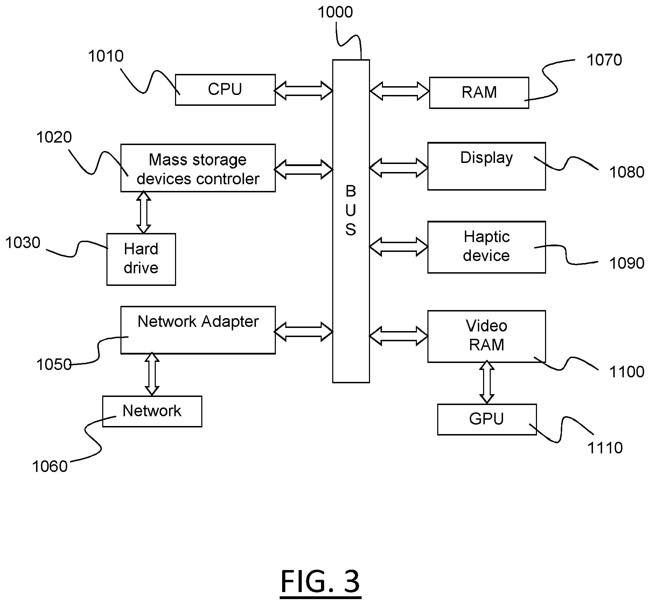

FIG. 3 illustrates an example of the computer system.

## Detailed description

It is provided a computer-implemented method for detection of an impact on automotive glass. The method comprises obtaining, for each respective sensor of at least three sensors, each at a respective predetermined location on or in proximity to the glass, a respective time of flight, at the respective sensor predetermined location, of a vibration wave generated by an impact on the glass. The method further comprises computing an impact location based on the predetermined locations and on the obtained times of flight.

Such a method forms an improved solution for detection of an impact on automotive glass. The method enables detection of an impact on automotive glass in an accurate and precise manner.

This is achieved by the method comprising obtaining, for each respective sensor of at least three sensors, each at a respective predetermined location on or in proximity of the glass, a respective time of flight, at the respective sensor predetermined location, of a vibration wave generated by an impact on the glass. As a result, an impact can be accurately detected. As each sensor is at its respective predetermined location on or in proximity to the glass, a different time of flight of a vibration wave can be obtained by each sensor, resulting in an overall more accurately determined impact location. Furthermore, the method allows for a fast, efficient and simplified determination of the impact location, as this determination relies on the positions of the sensors and on the generated waves' times of flight, which are parameters either known in advance (for the positions) or are easily measurable (for the times of flight) by the sensors.

Advantageously and according to some examples discussed hereinbelow, the method may further comprise determining a profile and/or an amplitude of the vibration wave that matches the vibration wave generated by the impact, thereby determining a profile and/or an amplitude of the vibration wave generated by the impact. As a result, the type of impact can be identified and quantified.

The computer-implemented method for detection of an impact on automotive glass of the present disclosure comprises:

- obtaining, for each respective sensor of at least three sensors, each at a respective predetermined location on or in proximity of to the glass, a respective time of flight, at the respective sensor predetermined location, of a vibration wave generated by an impact on the glass; and

- computing an impact location based on the predetermined locations and on the obtained times of flight.

The method obtains a respective time of flight for each respective sensor of at least three sensors. Each of the sensors (i.e. each sensor used in the method) is a device configured to receive and measure a time of flight of a vibration wave that propagates on the glass from the impact location. Each sensor herein may be a transducer, i.e. a device that is configured to both detect vibration waves and generate them (i.e. the sensor thereby also acting as an emitter). The at least three sensors may consist of exactly three sensors, or, alternatively, in more than three sensors. A larger number of sensors may be selected in view of obtaining an improved accuracy of the impact detection. The time of flight is the time taken by a vibration wave to traverse a set distance. Obtaining the respective times of flight may comprise measuring (e.g. in real-time) these times of flight, i.e. each respective sensor measures a respective time of flight of a vibration wave from the impact location. This allows the method to be performed in real-time during use of the car, for example by being executed by an on-board processing unit or module such as a microcontroller, and to detect an impact location in real-time. Instead of measuring a times of flight, the method may alternatively measure a parameter related to the time of flight and subsequently calculate the time of flight from this parameter. For example, the at least three sensors may each measure the structure-borne vibration waves. This may include, for example, measuring the time-domain wave profile (amplitudes and phase), the spectrum of the vibration (impact) wave and/or the arrival time of the vibration wave for each sensor. Additionally or alternatively, at least one of the sensors may be a microphone sensor, which may record the audible sound wave spectrum and profile generated by the impact. Alternatively, obtaining the respective times of flight may comprise providing already measured times of flight, e.g. by retrieving or downloading these times of flight from a (e.g. distant) memory or server where they have been stored further to their measurements. This allows to use the method as a post-processing solution, for example by being implemented on a computer system with computing capacities higher than those of an on-board processing unit or module, to determine an impact location based on already measured times of flight of the vibration wave.

Each of the sensors is at a respective predetermined location on or in proximity to the glass. The respective predetermined location provides that each sensor has its own location, i.e. the at least three sensors are different locations from each other. The respective predetermined location (i.e. the predetermined locations) is a location decided upon before the sensors are positioned on or in proximity to the glass. At least one or all of the sensors may be positioned on the glass. Alternatively, at least one or all of the sensors may be positioned in proximity to the glass, i.e. they may be positioned on a part of the automotive vehicle body (e.g. a part of a car body frame) that is of a minimal distance to the glass, i.e. that is at a distance lower than a given predefined maximal distance to the glass.

The method obtains times of flight of a vibration wave generated by an impact on the glass. In other words, the method comprises obtaining a respective time of flight value for each respective one of the at least three sensors, each respective time of flight being a time of flight/travel of the vibration wave generated by an impact experienced by the automotive glass, the time of flight being measured at the respective sensor location and corresponding to the time of travel of the wave from the impact location to the respective sensor location. The vibration wave is a disturbance propagating through the glass as a result of the impact. The wave travels from the impact and through the glass according to several directions (*e.g.* that depend on the impact), some of which leading the wave to the sensors. The vibration wave may be a bending wave. The impact on the glass is a shock or blow experienced by the glass due to objects coming into contact with the glass or due to an external vibration being applied to the glass.

The method computes an impact location based on the predetermined locations and on the obtained times of flight. This means that the method processes the predetermined locations (*e.g.* in the form of 2D coordinates corresponding to the locations in the planar surface defined by the glass) and the times of flight to deduce an impact location from these values. Computing the impact location may comprise taking the obtained times of flight as inputs, along with the predetermined (i.e. known) values of location and applying the times of flight values and location values to a group of equations.

The computing of the impact location may further comprise computing a velocity of the vibration wave. The computation of the impact location may in this case be further based on the velocity of the vibration wave. The computing of the velocity and of the impact location may comprise solving, by any suitable method or algorithm, the equations:

$$\sqrt{(x - x_0)^2 + (y - y_0)^2} = V_0 t_1$$

$$\sqrt{(x - x_1)^2 + (y - y_1)^2} = V_0 t_2$$

$$\sqrt{(x - x_2)^2 + (y - y_2)^2} = V_0 t_3$$

where $(x_0, y_0)$, $(x_1, y_1)$, $(x_2, y_2)$ are the sensor locations, $t_1$, $t_2$ and $t_3$, are the times of flight, $V_0$ is the velocity of the vibration wave, and $(x, y)$ is the impact location.

As previously discussed, the sensors are configured to measure the time of flight of the vibration wave generated by the impact (or time of arrival of the wave), the sensors may measure amplitudes of the vibration wave. However, the correlation of the impact force/pressure or impact spectrum with these measured amplitudes is not evident. A transfer function may be needed to bridge the gap and to quantify the impact. To this end, the method may apply a time reversal concept, which is not discussed.

The method may comprise determining, based on the respective times of flight, a tuning of at least three respective vibration wave emitters so as to generate a vibration wave that matches the vibration wave generated by the impact. The tuning may be an adjusting or a calibrating of each emitter, i.e. a calibration of the emitter's settings and parameters. Each emitter is an electronic device configured to generate a vibration wave and may be placed substantially at a same location than one of the sensors used by the method. The method may thereby use three (or more) respective pairs made of a respective emitter and a respective sensor, each respective pair at one of said respective predetermined location. Alternatively, each emitter and sensor of a pair may form a single same transducer, which is an electronic device configured to both generate and measure/receive a vibration wave. The tuning of the at least three emitters allows for a more accurate representation of the vibration wave generated by the impact, since the method obtains such a tuning that generates a wave matching that of the impact. A vibration wave that matches the vibration wave generated by the impact allows for the obtaining of any relevant physical information pertaining to a wave caused by the impact, for example the profile of the impact vibration wave.

The determining may comprise one or more iterations of generating, by each respective emitter, a respective vibration wave. The one or more iterations may further comprise measuring, by the sensors, the respective times of flight of the at least three generated vibration waves. The one or more iterations may further comprise comparing the times of flight of the three generated vibration waves to the times of flight of the vibration wave generated by the impact. In other words, each respective sensor may obtain the time of flight (*i.e.* at the sensor's location) of the wave generated by the impact and obtain the time of flight (i.e. still at the sensor's location) of the wave generated by the emitter also located at or substantially at the sensor's location, the emitter and the sensor being in examples a same transducer as previously discussed. These two times of flight are compared by the method, and this for each respective sensor. Additionally, the one or more iterations may further comprise tuning the emitters if there is a discrepancy between the compared times of flight, for example if a difference between the times of flight of the wave generated by the impact and those of the waves generated by the emitters exceed a predefined threshold.

Each iteration enables the method to achieve an emitter-generated vibration wave more closely representing the impact-generated vibration wave. One iteration may be sufficient for obtaining no discrepancy between the compared times of flight. Alternatively, multiple iterations may allow for obtaining no discrepancy between the compared times of flight. The steps of generating the respective vibration waves comprises generating the respective vibration waves simultaneously. The same at least three pairs or transducers may generate the vibration waves, with referring to the previous captured impact information (i.e. times of flight) as being the initial values, and may then sense the generated vibration waves in the multiplexing time.

The method may further comprise determining a profile and/or an amplitude of the vibration wave that matches the vibration wave generated by the impact, thereby determining a profile and/or an amplitude of the vibration wave generated by the impact. By intelligently modifying/tuning the input signal of the transducers, the second captured signal (the waveform/spectrum profile), i.e. the emitter-generated vibration wave, is tuned to be similar to the first captured signal, i.e. the impact-generated vibration wave, to imitate the impact. The input signal of the transducers can be compared with impact benchmarks to obtain information such as, but not limited to, the impact force amplitude and the impact contact geometries.

The method may further comprise, before the determining, denoising the vibration wave that matches the vibration wave generated by the impact. This may address a common issue for impact detection of large background vibration noise interference in on-track situations. There are many kinds of vibration noise for running vehicles. For on-track cases, the background vibration noise sources may include rolling noise (tire noise), wind noise, engine noise (for internal combustion engines, or "ICE"), etc. These parasite noise sources have been broadly investigated and are quite known to the automotive NVH (noise, vibration and harshness) industry. The noise sources may be relatively regular and anticipated with the speed. Therefore, the method may comprise (e.g. beforehand, at an initial stage of the method) analyzing their spectrum and designing the appropriate filter so that the method may abstract the impact signal (i.e. the emitter-generated vibration wave or the vibration wave that matches the vibration wave generated by the impact) when the amplitude is not obvious. Alternatively, other DSP (digital signal processing) algorithms and designs may be applied to improve the signal to noise ratio in the process of feature abstraction. The method may initially (i.e. at an initial stage, prior to the obtaining of the times of flight) use at least one active vibration control system with accelerometers, vibration sensors, vibration generators, signal processors and amplifiers to clean/reduce the on-track background noise before detecting an impact.

The automotive glass may be a laminated windshield. To increase the accuracy, resolution, and other performance, the emitters and sensors may be separated. Each sensor may be positioned at a distance larger than a minimal distance from the other sensors. The sensors and/or the emitters may be located on a top lateral region of the automotive glass. For example, the sensors and/or emitters may be located on the face 4 of a laminated windshield. The sensors and/or emitters may be located at the extremity of the windshield that meets the vehicle roof. This may enable the sensors and/or emitters to be free from obstructing the view of the driver and/or passengers.

At least one of the sensors may be any type of airborne sound sensor, such as, for example, a microphone sensor, or a MEMS (microelectromechanical system) sensor. This may allow the method to obtain more and/or different impact features. The microphone sensor may be a microphone sensor for airborne noise recording. Each of the at least three respective sensors may be part of a transducer. Each of the at least three respective emitters may be a part of a transducer. Each of the at least three respective sensors may form a pair with each of the at least three respective emitters. Each pair may be a part of the same transducer. At least one of the at least three sensors may be one type of sensor, and at least one of the at least three sensors may be another type of sensor. For example, at least one of the at least three sensors may be a microphone sensor and at least one of the at least three sensors may be a vibration sensor.

In addition to the determining of a tuning of at the least three respective vibration wave emitters, the method may comprise a step of virtually calculating the vibration wave profile and/or amplitude by implementation of theoretical models or numerical simulations. The determining of a tuning of at the least three respective vibration wave emitters may for example be completed by in-lab training tests to obtain the empirical model.

Additionally or alternatively, the method may comprise one or more of the following steps:

- analyzing the vibration wave profile and vibration wave spectrum;
- analyzing a microphone signal (i.e. audible sound feature) if one or more of the sensors is/are a microphone;

- comparing each of the vibration wave profile and vibration wave spectrum and/or the microphone signal with in-lab test data or training data; and/or
- based on the comparison, quantitatively and/or qualitatively determining/defining the impact types and the resulting risks.

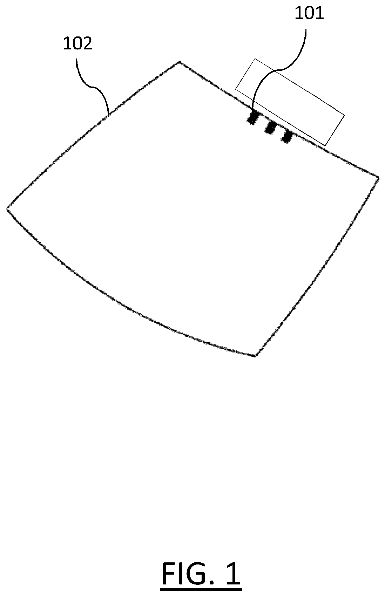

FIG. 1 displays an example of the method according to a configuration wherein three pairs of sensors and emitters are positioned on a top lateral region of automotive glass. The three pairs of emitters and sensors are in the form of three transducers 101. The automotive glass 102 is a vehicle windshield.

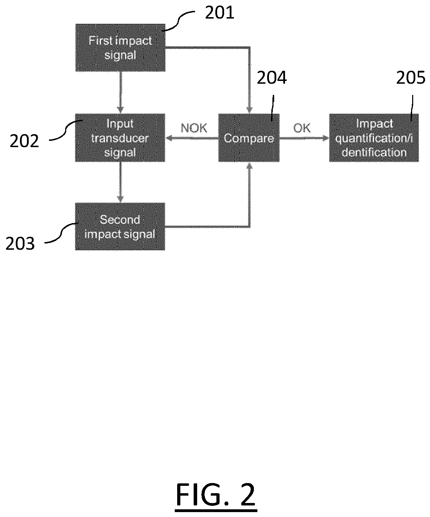

FIG. 2 shows a flowchart of an example of the method. At block 201, the method obtains a first impact signal, i.e. impact vibration wave (corresponding to times of flight measured by each of at least three respective sensors which are here transducers). At block 202, the method determines, based on the respective times of flight, a tuning of an input transducer signal of the at least three respective transducers so as to generate a vibration wave that matches the vibration wave generated by the impact. At block 203, the method generates a second impact signal, i.e. generates a vibration wave, based on the first impact signal. The method measures (by the transducers), the respective times of flight of the at least three generated vibration waves/signals. At block 204, the method compares the times of flight of the three generated vibration waves (second impact signal) to the times of flight of the vibration wave generated by the impact (first impact signal). If there is a discrepancy between the compared times of flight, the method tunes the transducers once more. The method performs iterations of the described method until no discrepancy exists between the compared times of flight. This results in, at block 205, an impact quantification/identification. Such a quantification may be determining a profile and/or an amplitude of the vibration wave (second impact signal) that matches the vibration wave generated by the impact (first impact signal), thereby determining a profile and/or an amplitude of the vibration wave generated by the impact (first impact signal).

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory (and optionally to a graphical user interface (GUI)), the memory having recorded thereon a computer program comprising instructions for performing the method. The memory may also store a database. The memory is any hardware adapted for such storage, possibly comprising several physical distinct parts (e.g. one for the program, and possibly one for the database).

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

FIG. 3 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks;

magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

In other examples, the system may be a microcontroller or any other suitable on-board processing unit or module. The microcontroller is a computer (*e.g.* of size sufficiently small to be installed in the automotive vehicle, *e.g.* on or in proximity to the glass) comprising one or more CPU's (central processing units), also referred to as processors, along with memory and programmable input/output variables. The one or more CPU are coupled with a memory, the memory having recorded thereon the previously-discussed computer program comprising instructions which, when the program is executed by the microcontroller, cause the microcontroller to perform the method. The microcontroller also comprises any suitable means for connecting the microcontroller each sensor, emitter and transducer involved in the method, such as an interface for a wired connection to these devices.

The method may use other electronic hardware that the system may comprise or may be connected to, or configured to be connected to, such as, for example, at least one DSP board, FPGA, amplifier, pre-amplifier, and one or more CPU's (central processing units). Electronic hardware may be installed on the dashboard or Pillar A, or other positions close to the glass panels. The data (e.g. detected impact location, determined profile and/or an amplitude of the vibration wave) may be demonstrated on the screen of the dashboard and/or may be transmitted by, for example, 4G/5G chips and/or Bluetooth devices.

## Claims

1. A computer-implemented method for detection of an impact on automotive glass, the method comprising:

   - obtaining, for each respective sensor of at least three sensors, each at a respective predetermined location on or in proximity to the glass, a respective time of flight, at the respective sensor predetermined location, of a vibration wave generated by an impact on the glass; and

   - computing an impact location based on the predetermined locations and on the obtained times of flight.

2. The method according to claim 1, wherein the computing further comprises computing a velocity of the vibration wave.

3. The method according to claim 2, wherein computing the velocity of the vibration wave and the impact location comprises solving the equations:

$$\sqrt{(x - x_0)^2 + (y - y_0)^2} = V_0 t_1$$

$$\sqrt{(x - x_1)^2 + (y - y_1)^2} = V_0 t_2$$

$$\sqrt{(x - x_2)^2 + (y - y_2)^2} = V_0 t_3$$

where $(x_0, y_0)$, $(x_1, y_1)$, $(x_2, y_2)$ are the sensor locations, $t_1$, $t_2$ and $t_3$, are the times of flight, $V_0$ is the velocity of the vibration wave, and $(x, y)$ is the impact location.

4. The method according to any one of claims 1 to 3, wherein the method further comprises:

   - determining, based on the respective times of flight, a tuning of at least three respective vibration wave emitters so as to generate a vibration wave that matches the vibration wave generated by the impact.

5. The method according to claim 4, wherein the determining comprises one or more iterations of:

   - generating, by each respective emitter, a respective vibration wave;
   - measuring, by the sensors, the respective times of flight of the at least three generated vibration waves;
   - comparing the times of flight of the three generated vibration waves to the times of flight of the vibration wave generated by the impact; and
   - tuning the emitters if there is a discrepancy between the compared times of flight.

6. The method according to claim 5, wherein the steps of generating the respective vibration waves comprises generating the respective vibration waves simultaneously.

7. The method according to any one claims 4 to 6, wherein the method further comprises determining a profile and/or an amplitude of the vibration wave that matches the vibration wave generated by the impact, thereby determining a profile and/or an amplitude of the vibration wave generated by the impact.

8. The method according to claim 7, wherein the method further comprises, before the determining, denoising the vibration wave that matches the vibration wave generated by the impact.

9. The method according to any one of claims 1 to 8, wherein each sensor is positioned at a distance larger than a minimal distance from the other sensors.

10. The method according to any one of claims 1 to 9, wherein the sensors and/or the emitters are transducers.

11. The method according to any one of claims 1 to 10, wherein the sensors and/or the emitters are located on a top lateral region of the automotive glass.

12. A computer program comprising instructions for performing the method of any one of claims 1 to 11.

13. A computer-readable data storage medium having recorded thereon the computer program of claim 12.

14. A computer system comprising a processor coupled to a memory, the memory having recorded thereon the computer program of claim 12.

15. An automotive glass system comprising an automotive glass and the computer system of claim 14.

# FIG. 1

FIG. 2

## FIG. 3

**EP 4 273 573 A1**

Europäisches
Patentamt
European
Patent Office
Office européen
des brevets

# EUROPEAN SEARCH REPORT

Application Number

EP 22 30 5652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 466 153 B1 (METHODE ELECTRONICS INC [US]) 14 May 2008 (2008-05-14) * paragraphs [0013] – [0017], [0027]; figures 1, 6b * | 1–15 | INV. G01S5/18 G01S5/00 B60R21/0136 G01H11/00 |
| X | US 2003/066692 A1 (DEVIGE FABRICE [FR] ET AL) 10 April 2003 (2003-04-10) * paragraph [0021]; figures 1-2 * | 1–15 | |
| A | US 2022/118925 A1 (BUTTOLO PIETRO [US] ET AL) 21 April 2022 (2022-04-21) * paragraph [0028] * | 3–8 | |

TECHNICAL FIELDS
SEARCHED       (IPC)

G01S
E06B
B60J
B60R
G01H

The present search report has been drawn up for all claims

| Place of search | Date of completion of the search | Examiner |
|---|---|---|
| Munich | 26 October 2022 | Ribbe, Jonas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 5652

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2022

| Patent document cited in search report | | Publication date | Patent family member(s) | | Publication date |
|---|---|---|---|---|---|
| EP 1466153 | B1 | 14-05-2008 | AT | 395583 T | 15-05-2008 |
| | | | AT | 409854 T | 15-10-2008 |
| | | | CA | 2473556 A1 | 31-07-2003 |
| | | | EP | 1466153 A1 | 13-10-2004 |
| | | | JP | 2005515466 A | 26-05-2005 |
| | | | KR | 20040107467 A | 20-12-2004 |
| | | | WO | 03062780 A1 | 31-07-2003 |
| US 2003066692 | A1 | 10-04-2003 | AU | 7071101 A | 08-01-2002 |
| | | | EP | 1295246 A1 | 26-03-2003 |
| | | | FR | 2811107 A1 | 04-01-2002 |
| | | | US | 2003066692 A1 | 10-04-2003 |
| | | | WO | 0201490 A1 | 03-01-2002 |
| US 2022118925 | A1 | 21-04-2022 | CN | 114435299 A | 06-05-2022 |
| | | | DE | 102021126447 A1 | 21-04-2022 |
| | | | US | 2022118925 A1 | 21-04-2022 |

EPO FORM P0459

For more details about this annex : see Official Journal of the European Patent Office, No. 12/82

**EP 4 273 573 A1**

**REFERENCES CITED IN THE DESCRIPTION**

**Patent documents cited in the description**

- FR 2749938 A1

- EP 3665431 A1